# EUROPEAN PATENT APPLICATION

(11) **EP 4 647 645 A1**
(43) Date of publication of application: **12.11.2025**
(21) Application number: 24753096.7
(22) Date of filing: 19.01.2024
(51) Int. Cl.: F17C 13/00

(54) **LIQUEFIED HYDROGEN STORAGE TANK AND METHOD FOR CONSTRUCTING SAME**

(30) Priority: 08.02.2023 JP 2023017752
(71) Applicant: KAWASAKI JUKOGYO KABUSHIKI KAISHA, Kobe-shi, Hyogo 650-8670 (JP)
(72) Inventor: HORINO, Satoshi, Chuo-ku, Kobe-shi Hyogo 650-8670 (JP); UMEDA, Akira, Chuo-ku, Kobe-shi Hyogo 650-8670 (JP); YAMADA, Hisayuki, Chuo-ku, Kobe-shi Hyogo 650-8670 (JP)
(74) Representative: Müller-Boré & Partner Patentanwälte PartG mbB
(86) International application number: PCT/JP2024/001539
(87) International publication number: WO 2024/166650

(57) **Abstract**

A liquefied hydrogen storage tank (1) includes an inner tank (4) including an inner tank roof (43) and an inner tank side plate (42), a heat insulation space (S2) formed between the inner tank (4) and a tank (3) outside the inner tank, a communication pipe (45) that penetrates the inner tank roof (43), a deck (7) that covers an upper surface of the inner tank roof (43) to form a gas passage (R1) extending from an upper opening (45a) of the communication pipe (45) to an outer edge portion of the inner tank roof (43) between the deck and the inner tank roof (43), and a powdered heat insulation material (56) disposed in an upper area of the deck (7) within the heat insulation space (S2).

## Description

### Technical Field

The present disclosure relates to a liquefied hydrogen storage tank that stores liquefied hydrogen.

### Background Art

The multiple shell tank shown in Patent Literature 1 described below is known. This multiple shell tank is a flat-bottomed triple shell tank for storing a low-temperature liquefied gas, and includes an inner tank, an intermediate tank, and an outer tank in this order from the inside. An inner heat insulation space (first inter-tank space) between the inner tank and the intermediate tank, and an outer heat insulation space (second inter-tank space) between the intermediate tank and the outer tank are each filled with a heat insulation material such as perlite. In addition, an inner tank roof that constitutes a roof part of the inner tank is provided with a communication pipe that penetrates the inner tank roof.

In Patent Literature 1 described above, the communication pipe that penetrates the inner tank roof causes a space (roof space part) between the inner tank roof and an opposing intermediate tank roof to communicate with an upper part (vapor phase part) inside the inner tank. However, in Patent Literature 1 described above, since the inner heat insulation space between the inner tank and the intermediate tank is filled with the heat insulation material such as perlite, there is a possibility that the difference between the pressure acting on the upper surface of the inner tank roof and the pressure acting on the lower surface of the inner tank roof increases, that is, the vertical differential pressure of the inner tank roof increases, and that the stress caused by the vertical differential pressure may act on the inner tank roof.

### Citation List

### Patent Literature

Patent Literature 1: JP 2022-103917 A

### Summary of Invention

The present disclosure has been made in view of the above circumstances, and an object of the present disclosure is to provide a liquefied hydrogen storage tank that is capable of reducing the vertical differential pressure of the inner tank roof while maintaining the cooled state of the inner tank.

To solve the above problem, a liquefied hydrogen storage tank according to one aspect of the present disclosure is a multiple shell tank for storing liquefied hydrogen, and includes: an inner tank including an inner tank roof and an inner tank side plate to define a storage space for the liquefied hydrogen; a heat insulation space formed between the inner tank and a tank outside the inner tank; a communication pipe that penetrates the inner tank roof; a deck that covers an upper surface of the inner tank roof to form a gas passage extending from an upper opening of the communication pipe to an outer edge portion of the inner tank roof between the deck and the inner tank roof; and a powdered heat insulation material disposed in an upper area of the deck in the heat insulation space.

A construction method according to another aspect of the present disclosure is a method for constructing a multiple shell liquefied hydrogen storage tank including: an inner tank including an inner tank roof and an inner tank side plate; a powdered heat insulation material disposed in a heat insulation space between the inner tank and a tank outside the inner tank; a communication pipe that penetrates the inner tank roof; and a deck including a support erected on an upper surface of the inner tank roof and an upper cover supported by the support. The method includes: constructing the inner tank roof by welding; fixing the support to the upper surface of the constructed inner tank roof and fixing a first cover material that constitutes a part of the upper cover to the support; joining the inner tank roof to which the support and the first cover material are fixed to an upper end of the inner tank side plate to construct the inner tank; executing an airtight test of the constructed inner tank; and forming a gas passage extending from an upper opening of the communication pipe to an outer edge portion of the inner tank roof between the upper cover and the inner tank roof by fixing a second cover material that constitutes another part of the upper cover to the support to cover a welding line of the inner tank roof from above after the airtight test is completed.

The liquefied hydrogen storage tank of the present disclosure can reduce the vertical differential pressure of the inner tank roof while maintaining the cooled state of the inner tank.

### Brief Description of Drawings

FIG. 1 is a cross-sectional view showing structure of a liquefied hydrogen storage tank according to one embodiment of the present disclosure.
FIG. 2 is a plan view showing structure of a deck constructed above an inner tank roof of the liquefied hydrogen storage tank.
FIG. 3 is a cross-sectional view along line III-III of FIG. 2.
FIG. 4 is a cross-sectional view along line IV-IV of FIG. 2.
FIG. 5 is a plan view showing the deck with a second cover material removed from an upper cover.
FIG. 6 is a flowchart showing a method for constructing the deck and an inner tank.

### Description of Embodiments

### [Overall Configuration of Liquefied Hydrogen Storage Tank]

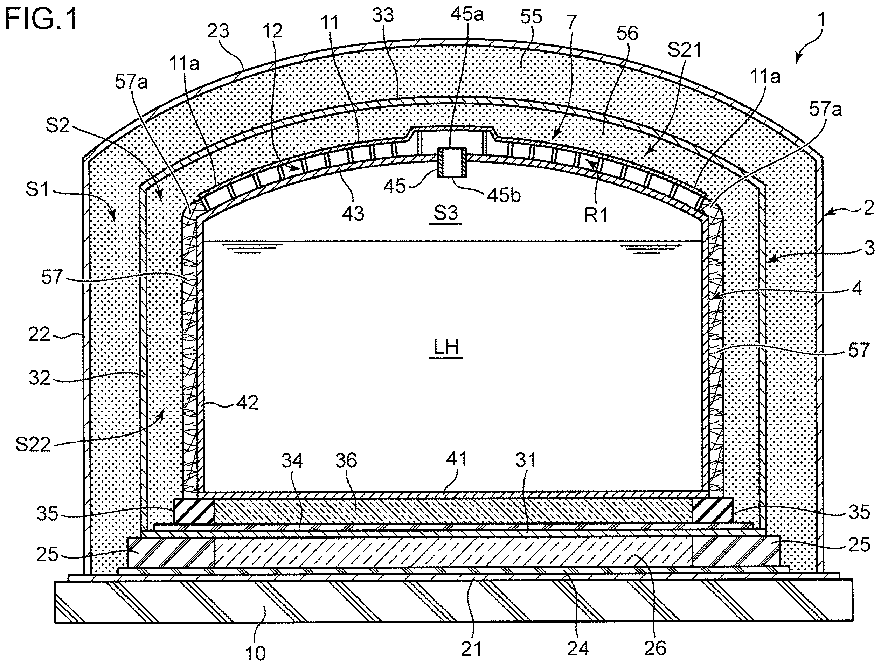

FIG. 1 is a cross-sectional view showing structure of a liquefied hydrogen storage tank 1 according to the first embodiment of the present disclosure. The liquefied hydrogen storage tank 1 shown in this figure is a triple shell tank that stores liquefied hydrogen LH, and includes a tank foundation 10, an outer tank 2 erected on the tank foundation 10, an intermediate tank 3 housed inside the outer tank 2, and an inner tank 4 housed inside the intermediate tank 3. The outer tank 2, the intermediate tank 3, and the inner tank 4 are all formed in a circular shape when viewed from above and are disposed concentrically.

The tank foundation 10 is a concrete layer that constitutes the foundation of the liquefied hydrogen storage tank 1. The tank foundation 10 has a larger size than the outer diameter of the outer tank 2.

The outer tank 2 is a closed body constructed from metal such as carbon steel, and includes an outer tank bottom plate 21, an outer tank side plate 22, and an outer tank roof 23. The outer tank bottom plate 21 is a disc-shaped bottom plate constructed directly on the tank foundation 10. The outer tank side plate 22 is a cylindrical side plate erected from the peripheral edge of the outer tank bottom plate 21. The outer tank roof 23 is a dome-shaped roof that is attached to the upper end of the outer tank side plate 22 to cover the upper opening of the outer tank side plate 22, and is formed in a convex spherical shape on the upper side.

The intermediate tank 3 is a closed body constructed from low-temperature steel such as SUS, and is disposed inside the outer tank 2. The intermediate tank 3 includes an intermediate tank bottom plate 31, an intermediate tank side plate 32, and an intermediate tank roof 33. The intermediate tank bottom plate 31 is a disc-shaped bottom plate with a smaller diameter than the outer tank bottom plate 21. The intermediate tank side plate 32 is a cylindrical side plate erected from the peripheral edge of the intermediate tank bottom plate 31. The intermediate tank roof 33 is a dome-shaped roof that is attached to the upper end of the intermediate tank side plate 32 to cover the upper opening of the intermediate tank side plate 32, and is formed in a convex spherical shape on the upper side. The intermediate tank 3 corresponds to "tank outside of the inner tank" in the present disclosure.

The inner tank 4 is a tank that defines therein a storage space for the liquefied hydrogen LH. The inner tank 4 is constructed from low-temperature steel such as SUS and is disposed inside the intermediate tank 3. The inner tank 4 includes an inner tank bottom plate 41, an inner tank side plate 42, and an inner tank roof 43. The inner tank bottom plate 41 is a disc-shaped bottom plate with a smaller diameter than the intermediate tank bottom plate 31. The inner tank side plate 42 is a cylindrical side plate erected from the peripheral edge of the inner tank bottom plate 41. The inner tank roof 43 is a dome-shaped roof that is attached to the upper end of the inner tank side plate 42 to cover the upper opening of the inner tank side plate 42, and is formed in a convex spherical shape on the upper side.

A vapor phase space S3 is formed in an inner upper part of the inner tank 4. The vapor phase space S3 is a space filled with a hydrogen gas evaporated from the liquefied hydrogen LH, and is formed between the inner tank roof 43 and the liquid surface of the liquefied hydrogen LH.

Between the outer tank bottom plate 21 and the intermediate tank bottom plate 31, a first level concrete layer 24, a first ring part 25, and a first bottom cold insulation layer 26 are interposed. The first level concrete layer 24 is a leveled concrete layer constructed on the outer tank bottom plate 21. The first ring part 25 is a high-strength ring-shaped concrete layer disposed on the periphery of the first level concrete layer 24. The first bottom cold insulation layer 26 is a layer having heat-insulating properties and disposed on the first level concrete layer 24 inside the first ring part 25.

Between the intermediate tank bottom plate 31 and the inner tank bottom plate 41, a second level concrete layer 34, a second ring part 35, and a second bottom cold insulation layer 36 are interposed. The second level concrete layer 34 is constructed on the intermediate tank bottom plate 31. The second ring part 35 is a high-strength ring-shaped concrete layer disposed on the periphery of the second level concrete layer 34. The second bottom cold insulation layer 36 is a layer having heat-insulating properties and disposed on the second level concrete layer 34 inside the second ring part 35.

Gap of a predetermined width are formed between the inner tank 4 and the intermediate tank 3, and between the intermediate tank 3 and the outer tank 2. Each gap functions as a heat insulation space that suppresses heat transfer from the outside air to the liquefied hydrogen LH. In the following, the gap between the outer tank 2 and the intermediate tank 3 is referred to as an outer heat insulation space S1, and the gap between the inner tank 4 and the intermediate tank 3 is referred to as an inner heat insulation space S2. The inner heat insulation space S2 corresponds to "heat insulation space" in the present disclosure.

The outer heat insulation space S1 between the outer tank 2 and the intermediate tank 3 is filled with an inert gas having a higher boiling point than hydrogen gas, for example, nitrogen gas. A powdered heat insulation material 55 is disposed in the outer heat insulation space S1. The powdered heat insulation material 55 is a heat insulation material having fluidity and including an aggregate of particles such as perlite and glass bubbles.

The inner heat insulation space S2 between the inner tank 4 and the intermediate tank 3 is filled with hydrogen gas. A powdered heat insulation material 56 and a glass wool 57 are disposed in the inner heat insulation space S2. The powdered heat insulation material 56 is a powdered heat insulation material including perlite, glass bubbles, and the like, similar to the above-described powdered heat insulation material 55 inside the outer heat insulation space S1. The glass wool 57 is a cotton-like heat insulation material primarily made of glass fibers.

The inner heat insulation space S2 includes a roof space part S21 and a side space part S22. The roof space part S21 is a dome-shaped space formed between the inner tank roof 43 and the intermediate tank roof 33, while the side space part S22 is a cylindrical space formed between the inner tank side plate 42 and the intermediate tank side plate 32. The powdered heat insulation material 56 is disposed in both the roof space part S21 and the side space part S22, while the glass wool 57 is mainly disposed in the side space part S22. Specifically, the glass wool 57 is disposed along an outer surface of the inner tank side plate 42 to occupy an inner area of the side space part S22. The powdered heat insulation material 56 is disposed in an area excluding the area where the glass wool 57 is disposed and a lower space (gas passage R1) of an upper cover 11, which will be described later, in the inner heat insulation space S2.

A communication pipe 45 is attached to the inner tank roof 43. The communication pipe 45 is a pipe that causes the inner heat insulation space S2 to communicate with the vapor phase space S3 inside the inner tank 4, and is provided to penetrate the central part of the inner tank roof 43 in the thickness direction. The communication pipe 45 includes an upper opening 45a that opens into the inner heat insulation space S2 and a lower opening 45b that opens into the vapor phase space S3. One or more communication pipes 45 can be attached at appropriate positions including the central part of the inner tank roof 43. The present embodiment illustrates the case where one communication pipe 45 is attached at the central part of the inner tank roof 43.

### [Deck and Gas Passage]

A deck 7 that partitions the roof space part S21 vertically is constructed in the roof space part S21. The deck 7 is a structure for limiting the above-described area where the powdered heat insulation material 56 is disposed, and is constructed along an upper surface of the inner tank roof 43.

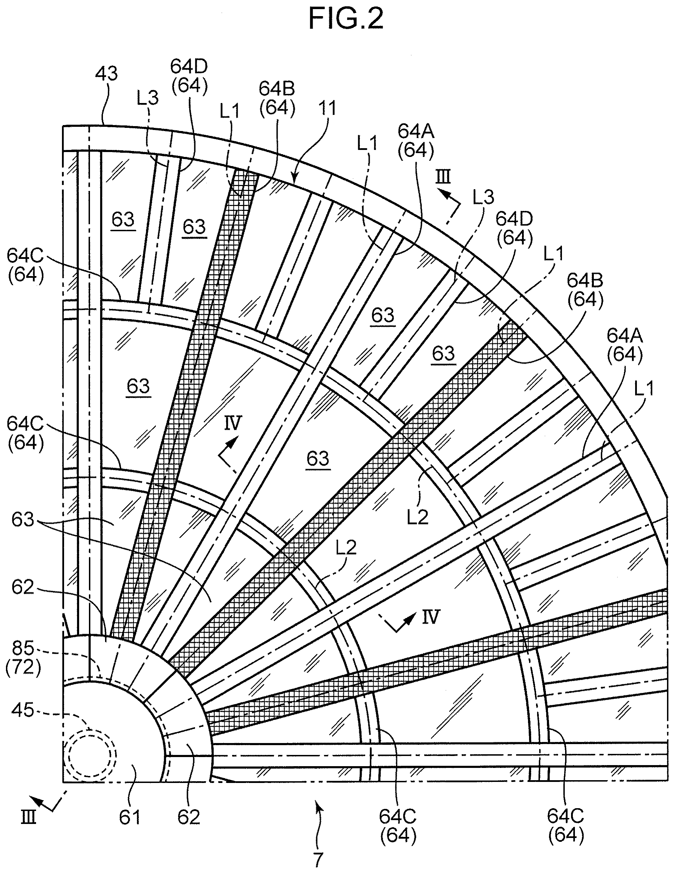

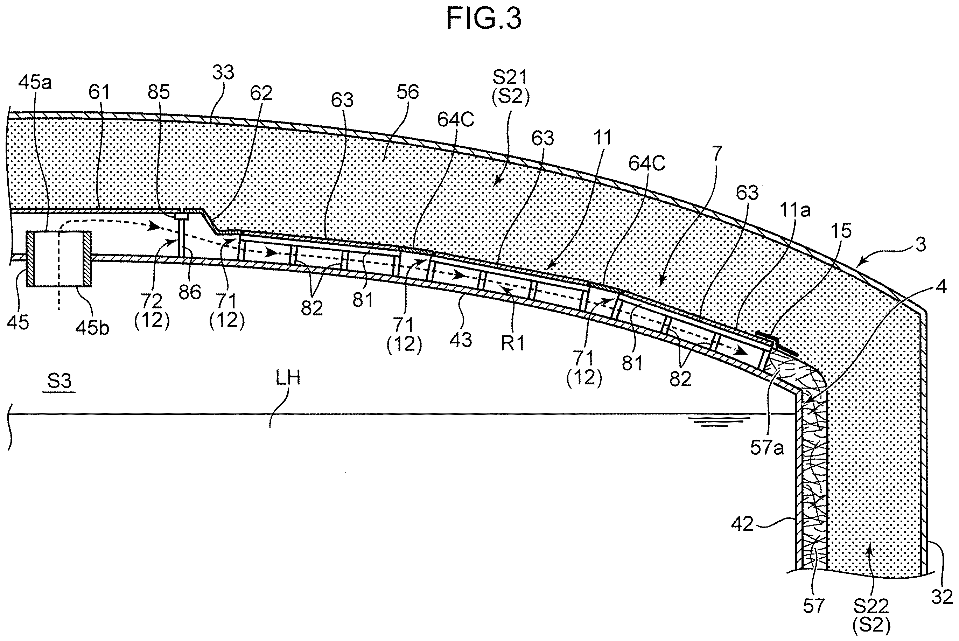

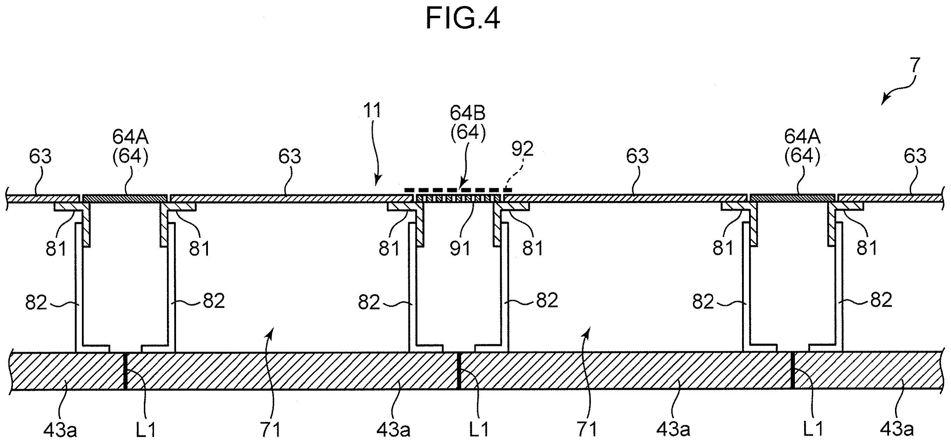

FIG. 2 is a plan view showing structure of the deck 7, FIG. 3 is a cross-sectional view along line III-III of FIG. 2, and FIG. 4 is a cross-sectional view along line IV-IV of FIG. 2. As shown in FIGS. 1 to 4, the deck 7 includes an upper cover 11 that covers the upper surface of the inner tank roof 43 and a support 12 that supports the upper cover 11 above the inner tank roof 43. The upper cover 11 is formed to curve in a dome shape as a whole, covering substantially the entire upper surface of the inner tank roof 43. The support 12 supports the upper cover 11 at a height spaced from both the inner tank roof 43 and the intermediate tank roof 33 such that the roof space part S21 is divided into two vertical spaces by the upper cover 11.

A gas passage R1 that is an open space where gas can flow is formed below the upper cover 11, that is, between the upper cover 11 and the inner tank roof 43. The gas passage R1 is radially continuous along the inner tank roof 43 from the center thereof to the vicinity of the outer edge. The support 12 includes a plurality of components that is distributed such that the radial continuity of the gas passage R1 is not impaired (details will be described later).

The upper cover 11 includes a center cover material 61 that covers the central area of the inner tank roof 43 including the upper part of the communication pipe 45, inner cover materials 62 that cover a ring-shaped area outside the center cover material 61, and first cover materials 63 and second cover materials 64 that cover an area outside the inner cover materials 62. Each of the cover materials 61 to 64 is made of a material that is impermeable to the powdered heat insulation material 56.

The second cover material 64 includes a plurality of cover elements combined in a lattice shape in plan view. That is, as mainly shown in FIG. 2, the second cover material 64 includes first main cover elements 64A extending radially from an outer edge of the inner cover material 62, second main cover elements 64B extending radially in an alternating arrangement with the first main cover elements 64A, first sub-cover elements 64C extending circumferentially to connect the adjacent first and second main cover elements 64A and 64B to each other, and second sub-cover elements 64D extending radially and arranged radially outside the first sub-cover elements 64C and between the adjacent first and second main cover elements 64A and 64B.

The first main cover elements 64A are arranged to be spaced at a constant pitch in the circumferential direction. Each of the first main cover elements 64A is a rectangular plate extending linearly in the radial direction from the outer edge of the inner cover material 62 to near the outer edge of the inner tank roof 43.

Each of the second main cover elements 64B is arranged between the adjacent first main cover elements 64A. Each of the second main cover elements 64B is a rectangular plate extending linearly in the radial direction from the outer edge of the inner cover material 62 to near the outer edge of the inner tank roof 43, in a similar manner to the first main cover element 64A. However, the second main cover element 64B has gas permeability that allows gas to flow, unlike the other cover elements 64A, 64C, and 64D. Specifically, as shown in FIG. 4, the second main cover element 64B includes a punching plate 91 in which numerous through holes are formed and a gas permeable cover 92 that covers an upper surface of the punching plate 91. The gas permeable cover 92 is a cover having gas permeability and combines, for example, a metal mesh and glass cloth. Such a second main cover element 64B has a property that is permeable to gas and impermeable to the powdered heat insulation material 56. The second main cover element 64B corresponds to "gas permeable cover material" in the present disclosure.

The second main cover element 64B is the only component that has gas permeability within the upper cover 11. That is, components of the upper cover 11 except for the second main cover element 64B each include a nonporous plate that is impermeable to both the powdered heat insulation material 56 and gas.

As shown in FIG. 2, each of the first sub-cover elements 64C is a partially ring-shaped plate extending in the circumferential direction, and is arranged in the circumferential direction along a plurality of concentric circles of different diameters. Each first sub-cover element 64C is arranged between the adjacent first and second main cover elements 64A and 64B, connecting both elements 64A and 64B in the circumferential direction. In the present embodiment, the first sub-cover elements 64C are arranged along two circles of different diameters.

Each of the second sub-cover elements 64D is a rectangular plate extending radially, and the length thereof is shorter than the length of the first and second main cover elements 64A and 64B described above. Each second sub-cover element 64D is arranged between the adjacent first and second main cover elements 64A and 64B, further radially outside the outer first sub-cover element 64C. In other words, the second sub-cover element 64D is arranged to bisect the area surrounded by the first and second main cover elements 64A and 64B and the first sub-cover element 64C in the circumferential direction.

Each of the first cover materials 63 is a partially fan-shaped plate in plan view, and is arranged to fill the gap between respective cover elements 64A to 64D of the second cover material 64 described above. That is, the first main cover element 64A, the second main cover element 64B, and the second sub-cover element 64D, which extend (radially) in the radial direction intersect with the first sub-cover element 64C extending in the circumferential direction, thereby partitioning the plurality of partially fan-shaped areas, and the first cover material 63 is arranged to cover each of the partitioned areas.

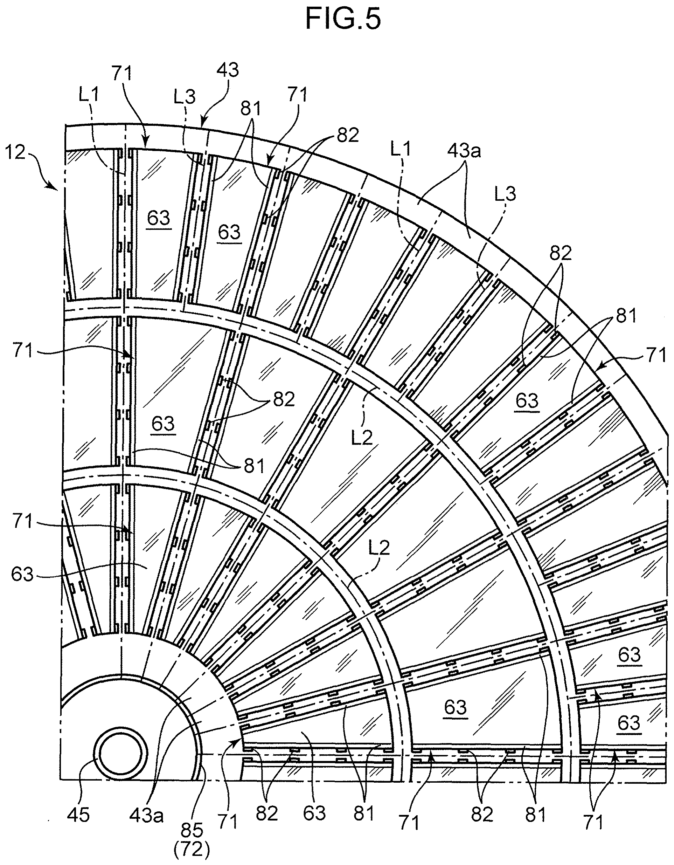

FIG. 5 is a plan view showing the deck 7 with the second cover materials 64 (cover materials 64A to 64D) removed from the upper cover 11. As shown in FIGS. 3 to 5, the support 12 includes a center ring base 72 disposed in the central part of the inner tank roof 43 and support bases 71 arranged radially outside of the center ring base 72.

The support bases 71 are arranged in a radial and concentric manner in an area that is radially outside of the center ring base 72. Each support base 71 includes a pair of beams 81 extending radially and columns 82 that supports each beam 81 above the inner tank roof 43. The pair of beams 81 is arranged along both side edges of the partially fan-shaped first cover material 63. As shown in FIG. 4, each beam 81 includes a frame having an L-shaped crosssection and extending radially. Each of the columns 82 is a vertically extending columnar body having an upper end fixed to the lower part of the beam 81 and a lower end fixed to the inner tank roof 43. The columns 82 are arranged in the radial direction along each beam 81 below each of the pair of beams 81.

The center ring base 72 includes a ring beam 85 and columns 86 (FIG. 3) that supports the ring beam 85 above the inner tank roof 43. The ring beam 85 is a ring-shaped beam in plan view disposed outside the communication pipe 45. The columns 86, each of which is a columnar body extending vertically, are arranged in the circumferential direction along the ring beam 85.

The first cover material 63 and the second cover material 64 are supported by the support base 71 above the inner tank roof 43. For example, as shown in FIGS. 4 and 5, the first cover material 63 is attached to cover between the pair of beams 81 in each support base 71. As shown in FIGS. 2 and 4, the first and second main cover elements 64A and 64B as well as the second sub-cover element 64D of the second cover material 64 are attached to cover between the beams 81 of the support base 71 that are adjacent in the circumferential direction.

The center cover material 61 is a circular plate that covers the upper part of the communication pipe 45 and is supported by the center ring base 72 above the inner tank roof 43. The center cover material 61, whose periphery is fixed to the ring beam 85, is disposed to cover the central area of the inner tank roof 43 including the upper part of the communication pipe 45. The present embodiment shows an example in which the center cover material 61 includes a single circular plate, but the center cover material 61 may also be an assembly of a plurality of divided plates that has a circular shape as a while.

Each of the inner cover materials 62 is a partially fan-shaped plate, and is arranged along the outer periphery of the center cover material 61 to have a ring shape that surrounds the center cover material 61 from the outside as a whole. The inner edge of each of the inner cover materials 62 is fixed to the center ring base 72. The outer edge of each of the inner cover materials 62 is fixed to each inner end of the support bases 71 arranged in the circumferential direction outside the center ring base 72. As shown in FIG. 3, in the present embodiment, the height of the ring beam 85 of the center ring base 72 is higher than the height of the beam 81 of the support base 71. Therefore, the inner cover material 62 has a shape in which the height changes at an intermediate position in the radial direction.

As shown in FIGS. 4 and 5, the inner tank roof 43 is configured by partially fan-shaped roof pieces 43a being welded to each other at welding lines L1 to L3. The welding lines L1 to L3 are formed to extend in the radial direction and the circumferential direction, intersecting each other. Specifically, as shown in FIGS. 2 and 5, the welding lines include radial main welding lines L1 extending radially from near the center of the inner tank roof 43 to the outer edge, circumferential welding lines L2 extending circumferentially along a plurality of (two here) concentric circles of different diameters, and radial sub-welding lines L3 extending radially and formed between the adjacent radial main welding lines L1 and radially outside the outer circumferential welding lines L2.

Respective cover elements 64A to 64D of the second cover material 64 are arranged along the respective welding lines L1 to L3 described above. That is, the first and second main cover elements 64A and 64B are each arranged to cover the radial main welding line L1 from above, the first sub-cover element 64C is arranged to cover the circumferential welding line L2 from above, and the second sub-cover element 64D is arranged to cover the radial sub-welding line L3 from above. Conversely, the first cover material 63 is arranged at a position that does not overlap with each of the welding lines L1 to L3.

Since the deck 7 with the above structure is constructed above the inner tank roof 43, the gas passage R1 that allows gas to flow is formed between the upper cover 11 of the deck 7 and the inner tank roof 43. As shown in FIGS. 1 and 3, to enable smooth gas flow through the gas passage R1, the powdered heat insulation material 56 is not disposed in the gas passage R1. That is, the powdered heat insulation material 56 is disposed exclusively above the upper cover 11 in the roof space part S21. The powdered heat insulation material 56 is disposed exclusively outside the glass wool 57 in the side space part S22. In other words, the powdered heat insulation material 56 is disposed exclusively in the outer area of the inner heat insulation space S2 to occupy the space above the upper cover 11 and the space outside the glass wool 57.

The radially outer end of the gas passage R1, that is, the ring-shaped opening formed between the outer edges of the upper cover 11 and the inner tank roof 43 is covered with the glass wool 57. That is, the glass wool 57 is disposed cylindrically to cover the entire outer surface of the inner tank side plate 42, and an upper end 57a of the glass wool 57 covers the radially outer end of the gas passage R1. In this way, the upper end 57a of the glass wool 57 that covers the radially outer end of the gas passage R1 functions as a shield to prevent the powdered heat insulation material 56 from flowing into the gas passage R1.

A clamp 15 (FIG. 3) for fixing the upper end 57a of the glass wool 57 is attached to an outer edge portion 11a of the upper cover 11. The clamp 15 is a flexible band-like body including a glass cloth or the like, and is disposed to extend radially from the outer edge portion 11a of the upper cover 11 to the upper end 57a of the glass wool 57. A part of the inner side of the clamp 15 is fixed to the outer edge portion 11a of the upper cover 11 by adhesion or the like, and a part of the outer side of the clamp 15 is fixed to the upper end 57a of the glass wool 57 via an anchor pin or the like, thereby fixing the upper end 57a of the glass wool 57 to a position that covers the radially outer end of the gas passage R1.

The upper opening 45a of the communication pipe 45 opens into the central part of the gas passage R1. This causes the gas passage R1 extending above the inner tank roof 43 from the center thereof to the vicinity of the outer edge, and the vapor phase space S3 below the inner tank roof 43 to communicate with each other via the communication pipe 45. This allows gas to flow between the vapor phase space S3 and the side space part S22. For example, as shown by the dashed arrow in FIG. 3, the hydrogen gas that flows from the vapor phase space S3 through the communication pipe 45 into the roof space part S21 can pass through the gas passage R1 and flow from the upper opening 45a of the communication pipe 45 to the outer edge portion of the roof space part S21, in other words, to the side space part S22. In other words, the gas passage R1 is provided in the roof space part S21 to allow gas to flow between the upper opening 45a of the communication pipe 45 and the side space part S22.

### [Method for Constructing Deck and Inner Tank]

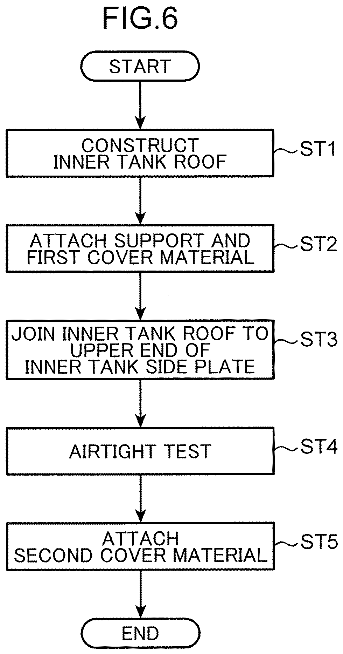

Next, the method for constructing the above-described deck 7 and the inner tank 4 will be described with reference to the flowchart in FIG. 6.

First, the roof pieces 43a are welded to each other to construct the inner tank roof 43 (step ST1). The welding is performed along the welding lines L1 to L3 described above.

Next, the support 12 and the first cover material 63 are attached to the upper surface of the inner tank roof 43 (step ST2). That is, as shown in FIG. 5, the support 12 including the support bases 71 is fixed to the upper surface of the inner tank roof 43, and the first cover material 63 is fixed to the upper surface of each support base 71. The support base 71 and the first cover material 63 are both attached at positions that do not overlap with the welding lines L1 to L3.

Next, the inner tank roof 43 is joined to the upper end of the inner tank side plate 42 (step ST3). For example, the above-described inner tank roof 43 to which the support 12 and the first cover material 63 are fixed is lifted to a height corresponding to the upper end of the already constructed inner tank side plate 42, and in that state, the outer edge of the inner tank roof 43 is joined to the upper end of the inner tank side plate 42. As a result, the inner tank 4 including the inner tank side plate 42 and the inner tank roof 43 is constructed.

Next, an airtight test of the inner tank 4 is executed (step ST4). This airtight test is a test to determine whether the welding at the above-described welding lines L1 to L3 has been performed with airtightness. If it is confirmed that air leakage from the welding lines L1 to L3, that is, a welding defect occurs in this airtight test, welding rework is performed on a place where the welding defect has occurred.

Next, the second cover material 64 is attached to the support 12 above the inner tank roof 43 (step ST5). That is, the cover elements 64A to 64D of the second cover material 64 are fixed to the support base 71 to fill gaps between the first cover materials 63 that have been previously attached. As a result, the radial main welding line L1 and the radial sub-welding line L3 are covered from above with the first and second main cover elements 64A and 64B as well as the second sub-cover element 64D, while the circumferential welding line L2 is covered from above with the first sub-cover element 64C. Along with the attachment of the second cover material 64, the attachment of the center cover material 61 and the inner cover material 62 is also performed.

After going through each of the above steps, the upper cover 11 including the cover materials 61 to 64 is formed above the support 12, and the deck 7 is constructed above the inner tank roof 43. The gas passage R1 extending radially from the upper opening 45a of the communication pipe 45 to the outer edge portion of the inner tank roof 43 is formed between the upper cover 11 and the inner tank roof 43.

### [Operational Effects]

As described above, in the present embodiment, the communication pipe 45 that causes the roof space part S21 to communicate with the vapor phase space S3 is provided in the inner tank roof 43, and the deck 7 to form the gas passage R1 extending from the upper opening 45a of the communication pipe 45 to the outer edge portion of the inner tank roof 43 is constructed above the inner tank roof 43. The powdered heat insulation material 56 is disposed in the upper area of the deck 7 in the roof space part S21. Such a configuration has an advantage in that the vertical differential pressure of the inner tank roof 43 can be reduced while the cooled state of the inner tank 4 can be maintained.

That is, in the present embodiment, the communication pipe 45 penetrates the inner tank roof 43, and the gas passage R1 is formed below the deck 7 constructed above the inner tank roof 43. Therefore, for example, when the pressure of the hydrogen gas in the vapor phase space S3 inside the inner tank 4 increases, the hydrogen gas can be introduced into the roof space part S21 through the communication pipe 45, and the introduced hydrogen gas can be caused to flow through the gas passage R1 to the outer edge portion of the roof space part S21 or to the side space part S22 (see FIG. 3). Conversely, when the pressure in the vapor phase space S3 decreases, a reverse flow of the hydrogen gas from the roof space part S21 toward the vapor phase space S3 can also be formed. This makes it possible to reduce the vertical differential pressure, which is the difference between the pressure acting on the upper surface of the inner tank roof 43 and the pressure acting on the lower surface of the inner tank roof 43, over a wide range in the radial direction, and to alleviate the stress applied to the inner tank roof 43 by the differential pressure.

For example, if the deck 7 is abolished and the gas passage R1 is closed, that is, if the powdered heat insulation material 56 is disposed throughout the roof space part S21, the flow of hydrogen gas between the upper opening 45a of the communication pipe 45 and the side space part S22 is hindered by the powdered heat insulation material 56, resulting in that the vertical differential pressure of the inner tank roof 43 is easily increased, particularly in the radial outer area. In contrast, according to the present embodiment in which the gas passage R1 is formed to allow gas to flow between the upper opening 45a of the communication pipe 45 and the side space part S22, the increase in the vertical differential pressure of the inner tank roof 43 due to the above-described circumstances can be suppressed, and the stress applied to the inner tank roof 43 can be alleviated.

Since the powdered heat insulation material 56 is disposed above the deck 7, while using the lower space of the deck 7 as the gas passage R1, it is possible to suppress the heat input from the outside to the inner tank roof 43 by using the powdered heat insulation material 56, and to maintain the cooled state of the inner tank 4.

In the present embodiment, since the deck 7 including the support 12 erected on the upper surface of the inner tank roof 43 and the upper cover 11 supported by the support 12 is constructed, it is possible to stably dispose the powdered heat insulation material 56 above the upper cover 11 while using the gas passage R1 below the upper cover 11 to reduce the vertical differential pressure of the inner tank roof 43.

In the present embodiment, the upper cover 11 includes the first cover material 63 and the second cover material 64, with the second cover material 64 covering the welding lines L1 to L3 of the inner tank roof 43, thereby improving the workability of the inner tank 4 and the deck 7. That is, since the area including the welding lines L1 to L3 of the inner tank roof 43 and the area not including the welding lines L1 to L3 are covered with the separate cover materials 63 and 64, for example, the airtight test after constructing the inner tank roof 43 by welding can be performed in a state where the first cover material 63 is attached and the second cover material 64 is not attached. Therefore, when a welding defect is discovered as a result of the airtight test, the rework of the welding defect can be performed easily in a state where the second cover material 64 that covers the welding lines L1 to L3 is not present.

In the present embodiment, a part of the second cover material 64 is configured using the gas permeable second main cover element 64B that is permeable to gas and impermeable to the powdered heat insulation material 56, thereby enabling the hydrogen gas to flow across the second cover material 64, and reducing the vertical differential pressure of the upper cover 11. As a result, the stress applied to the upper cover 11 is suppressed, allowing the required strength of the deck 7 to be kept low, and alleviating the weight of the deck 7. The second main cover element 64B that provides gas permeability to the upper cover 11 is configured using a material that is impermeable to the powdered heat insulation material 56 due to its fine structure, thereby preventing the powdered heat insulation material 56 from flowing into the gas passage R1 below the upper cover 11.

In the present embodiment, the glass wool 57 is disposed along the inner tank side plate 42, and the upper end 57a of the glass wool 57 blocks the radially outer end of the gas passage R1. With such a configuration, since the inflow of the powdered heat insulation material 56 into the gas passage R1 is prevented by the glass wool 57, the equalization of pressure within the gas passage R1 is not hindered by the powdered heat insulation material 56, allowing the vertical differential pressure of the inner tank roof 43 to be effectively reduced. The combination of the powdered heat insulation material 56 and the glass wool 57 can sufficiently maintain the cooled state of the inner tank side plate 42.

### [Variations]

In the above embodiment, the glass wool 57, which is a cotton-like heat insulation material, is disposed along the inner tank side plate 42, but the glass wool 57 may be omitted. That is, all of the heat insulation material disposed in the inner heat insulation space S2 may be the powdered heat insulation material 56. In this case, as a shield to prevent the powdered heat insulation material 56 from flowing into the gas passage R1, for example, it is preferable to provide a gas permeable fence including glass cloth or the like at the radially outer end of the gas passage R1.

In the above embodiment, no heat insulation material is particularly disposed in the gas passage R1, but some relatively gas permeable heat insulation material, for example, a cotton-like heat insulation material such as the glass wool 57 may be disposed in all or part of the gas passage R1.

In the above embodiment, the deck 7 is constructed such that the gas passage R1 is formed to extend to the vicinity of the outermost periphery (outer edge) of the inner tank roof 43. However, the deck 7 is required to be constructed at least to cover the most area of the inner tank roof 43 including the upper opening 45a of the communication pipe 45, and does not necessarily have to extend to near the outermost periphery of the inner tank roof 43. That is, the radially outer end of the upper cover 11 of the deck 7 or the gas passage R1 is required at least to be sufficiently distant from the center of the inner tank roof 43 to significantly achieve the above-described effect of reducing the vertical differential pressure of the inner tank roof 43. The gas passage in such a case also corresponds to "gas passage extending to the outer edge portion of the inner tank roof" in the present disclosure.

In the above embodiment, an example of applying the present disclosure to the triple shell tank including the outer tank 2, the intermediate tank 3, and the inner tank 4 has been described. However, the present disclosure is widely applicable to a tank including at least the inner tank 4 and a tank outside the inner tank. For example, it is also possible to apply the present disclosure to a double-shell tank that includes only the outer tank and the inner tank, and does not include the intermediate tank.

### [Conclusion]

The above embodiments and the variations thereof include the following disclosure.

A liquefied hydrogen storage tank according to a first aspect of the present disclosure is a multiple shell tank for storing liquefied hydrogen, and includes: an inner tank including an inner tank roof and an inner tank side plate to define a storage space for the liquefied hydrogen; a heat insulation space formed between the inner tank and a tank outside the inner tank; a communication pipe that penetrates the inner tank roof; a deck that covers an upper surface of the inner tank roof to form a gas passage extending from an upper opening of the communication pipe to an outer edge portion of the inner tank roof between the deck and the inner tank roof; and a powdered heat insulation material disposed in an upper area of the deck in the heat insulation space.

According to the first aspect, since the communication pipe penetrates the inner tank roof, and the gas passage is formed below the deck constructed above the inner tank roof, for example, when the pressure of the hydrogen gas in the vapor phase space in the upper part of the inner tank increases, it is possible to cause the hydrogen gas to flow to the side of the heat insulation space through the communication pipe and the gas passage. Conversely, when the pressure in the vapor phase space decreases, a reverse flow of the hydrogen gas from the heat insulation space toward the vapor phase space can also be formed. This makes it possible to reduce the vertical differential pressure, which is the difference between the pressure acting on the upper surface of the inner tank roof and the pressure acting on the lower surface of the inner tank roof, over a wide range in the radial direction, and to alleviate the stress applied to the inner tank roof by the differential pressure.

Since the powdered heat insulation material is disposed above the deck, while using the lower space of the deck as the gas passage, it is possible to suppress the heat input from the outside to the inner tank roof by using the powdered heat insulation material, and to maintain the cooled state of the inner tank.

In the liquefied hydrogen storage tank according to a second aspect, in the first aspect, the deck includes a support erected on the upper surface of the inner tank roof and an upper cover supported by the support to cover the upper surface of the inner tank roof with a spacing, and the powdered heat insulation material is disposed above the upper cover.

In the second aspect, while forming the gas passage below the upper cover supported by the support, it is possible to stably dispose the powdered heat insulation material above the upper cover.

In the liquefied hydrogen storage tank according to a third aspect, in the second aspect, the upper cover includes a gas permeable cover material that is permeable to gas and impermeable to the powdered heat insulation material.

In the third aspect, since the upper cover is provided with gas permeability, the flow of gas across the upper cover becomes possible, and the vertical differential pressure of the upper cover can be reduced. As a result, the required strength of the deck can be reduced, allowing the weight of the deck to be alleviated. The gas permeable cover material that provides gas permeability to the upper cover is configured using a material that is impermeable to the powdered heat insulation material due to its fine structure, thereby preventing the powdered heat insulation material from flowing into the gas passage below the upper cover.

In the liquefied hydrogen storage tank according to a fourth aspect, in the second and third aspects, the upper cover includes a first cover material and a second cover material that is adjacent to the first cover material and covers a welding line of the inner tank roof from above.

In the fourth aspect, since the area including the welding line of the inner tank roof and the area not including the welding line are covered with separate cover materials, the rework of a welding defect of the inner tank roof can be easily performed without attachment of the second cover that covers the welding line.

In the liquefied hydrogen storage tank according to a fifth aspect, in the first to fourth aspects, a shield is provided at a radially outer end of the gas passage to prevent the powdered heat insulation material from flowing into the gas passage.

In the fifth aspect, since the shield prevents the powdered heat insulation material from flowing into the gas passage, the equalization of pressure within the gas passage is not hindered by the powdered heat insulation material, allowing the vertical differential pressure of the inner tank roof to be effectively reduced.

A construction method according to a sixth aspect of the present disclosure is a method for constructing a multiple shell liquefied hydrogen storage tank including: an inner tank including an inner tank roof and an inner tank side plate; a powdered heat insulation material disposed in a heat insulation space between the inner tank and a tank outside the inner tank; a communication pipe that penetrates the inner tank roof; and a deck including a support erected on an upper surface of the inner tank roof and an upper cover supported by the support. The method includes: constructing the inner tank roof by welding; fixing the support to the upper surface of the constructed inner tank roof and fixing a first cover material that constitutes a part of the upper cover to the support; joining the inner tank roof to which the support and the first cover material are fixed to an upper end of the inner tank side plate to construct the inner tank; executing an airtight test of the constructed inner tank; and forming a gas passage extending from an upper opening of the communication pipe to an outer edge portion of the inner tank roof between the upper cover and the inner tank roof by fixing a second cover material that constitutes another part of the upper cover to the support to cover a welding line of the inner tank roof from above after the airtight test is completed.

According to the sixth aspect, since the second cover material that covers the welding line of the inner tank roof is attached after the airtight test of the inner tank, when a welding defect is discovered as a result of the airtight test, the rework of the welding defect can be easily performed in a state where the second cover material that covers the welding line is not attached.

### Reference Signs

- 1: liquefied hydrogen storage tank
- 3: intermediate tank (tank outside the inner tank)
- 4: inner tank
- 7: deck
- 11: upper cover
- 12: support
- 42: inner tank side plate
- 43: inner tank roof
- 45: communication pipe
- 45a: upper opening (of communication pipe)
- 56: powdered heat insulation material
- 63: first cover material
- 64: second cover material
- 64B: second main cover element (gas permeable cover material)
- 57: glass wool (shield)
- S2: inner heat insulation space (heat insulation space)
- R1: gas passage

## Claims

1. multiple shell liquefied hydrogen storage tank for storing liquefied hydrogen, the liquefied hydrogen storage tank comprising:
an inner tank including an inner tank roof and an inner tank side plate to define a storage space for the liquefied hydrogen;
a heat insulation space formed between the inner tank and a tank outside the inner tank;
a communication pipe that penetrates the inner tank roof;
a deck that covers an upper surface of the inner tank roof to form a gas passage extending from an upper opening of the communication pipe to an outer edge portion of the inner tank roof between the deck and the inner tank roof; and
a powdered heat insulation material disposed in an upper area of the deck in the heat insulation space.

2. The liquefied hydrogen storage tank according to claim 1, wherein
the deck includes a support erected on the upper surface of the inner tank roof and an upper cover supported by the support to cover the upper surface of the inner tank roof with a spacing, and
the powdered heat insulation material is disposed above the upper cover.

3. The liquefied hydrogen storage tank according to claim 2, wherein
the upper cover includes a gas permeable cover material that is permeable to gas and impermeable to the powdered heat insulation material.

4. The liquefied hydrogen storage tank according to claim 2, wherein
the upper cover includes a first cover material and a second cover material that is adjacent to the first cover material and covers a welding line of the inner tank roof from above.

5. The liquefied hydrogen storage tank according to any one of claims 1 to 4, further comprising
a shield provided at a radially outer end of the gas passage to prevent the powdered heat insulation material from flowing into the gas passage.

6. method for constructing a multiple shell liquefied hydrogen storage tank including: an inner tank including an inner tank roof and an inner tank side plate; a powdered heat insulation material disposed in a heat insulation space between the inner tank and a tank outside the inner tank; a communication pipe that penetrates the inner tank roof; and a deck including a support erected on an upper surface of the inner tank roof and an upper cover supported by the support,
the method comprising:
constructing the inner tank roof by welding;
fixing the support to the upper surface of the constructed inner tank roof and fixing a first cover material that constitutes a part of the upper cover to the support;
joining the inner tank roof to which the support and the first cover material are fixed to an upper end of the inner tank side plate to construct the inner tank;
executing an airtight test of the constructed inner tank; and
forming a gas passage extending from an upper opening of the communication pipe to an outer edge portion of the inner tank roof between the upper cover and the inner tank roof by fixing a second cover material that constitutes another part of the upper cover to the support to cover a welding line of the inner tank roof from above after the airtight test is completed.
